# EUROPEAN PATENT APPLICATION

(11) **EP 4 844 830 A1**
(43) Date of publication of application: **25.11.2026**
(21) Application number: 26179223.8
(22) Date of filing: 18.05.2026
(51) Int. Cl.: H01M 4/36, H01M 4/13, H01M 4/66, H01M 4/131, H01M 4/525, H01M 10/0525, H01M 4/02

(54) **POSITIVE ELECTRODE FOR RECHARGEABLE LITHIUM BATTERY AND RECHARGEABLE LITHIUM BATTERIES INCLUDING THE SAME**

(30) Priority: 19.05.2025 KR 20250064744
(71) Applicant: SAMSUNG SDI CO., LTD., Yongin-si, Gyeonggi-do 17084 (KR)
(72) Inventor: CHO, Moonju, 17084 Yongin-si (KR); CHO, Youngkwang, 17084 Yongin-si (KR); JEON, Seunghyun, 17084 Yongin-si (KR); LIM, Seunghyun, 17084 Yongin-si (KR); CHOI, Yusun, 17084 Yongin-si (KR); KIM, Hyewon, 17084 Yongin-si (KR); KIM, Beomkwon, 17084 Yongin-si (KR)
(74) Representative: Michalski Hüttermann & Partner mbB

(57) **Abstract**

The present disclosure relates to a positive electrode, and to a rechargeable lithium battery including the positive electrode. The positive electrode of the present disclosure includes a positive electrode current collector, a functional layer on the positive electrode current collector, the functional layer including a first particle and a second particle, and a positive electrode active material layer on the functional layer. Particle shapes of the first particle and the second particle are different.

## Description

### CROSS-REFERENCE TO RELATED APPLICATION

This application claims priority to Korean Patent Application No. 10-2025-0064744 filed on May 19, 2025 in the Korean Intellectual Property Office.

### BACKGROUND

The present disclosure relates to a positive electrode for a rechargeable lithium battery, and to a rechargeable lithium battery including the positive electrode.

With increasing presence of battery-powered electronic devices such as, e.g., mobile phones, notebook computers, electric vehicles, and the like, the demand for rechargeable batteries with high energy density and large capacity is increasing. Accordingly, enhancing the performance of rechargeable lithium batteries may be advantageous.

A rechargeable lithium battery generally includes a positive electrode, a negative electrode, and an electrolyte. Both the positive and negative electrodes contain active materials capable of lithium-ion intercalation and deintercalation. Electrical energy is generated through oxidation and reduction reactions as lithium ions move between the electrodes during charging or discharging.

### SUMMARY

Examples of the present disclosure include a positive electrode with desired or improved energy density and penetration safety.

The present disclosure describes a rechargeable lithium battery with desired or improved energy density and penetration safety.

According to an example embodiment of the present disclosure, a positive electrode for a rechargeable lithium battery includes a positive electrode current collector, a functional layer on the positive electrode current collector, and a positive electrode active material layer on the functional layer. The functional layer may include a first particle and a second particle. An aspect ratio of the first particle may be greater than an aspect ratio of the second particle, and a sphericity of the first particle may be less than a sphericity of the second particle.

According to an example embodiment of the present disclosure, a positive electrode for a rechargeable lithium battery includes a positive electrode current collector, a functional layer on the positive electrode current collector, and a positive electrode active material layer on the functional layer. The functional layer includes a first particle and a second particle. A composite density of the positive electrode is at least about 3.00 g/cc, an aspect ratio of the first particle is in a range of about 20 to about 30, and an aspect ratio of the second particle is in a range of about 1 to about 5.

According to an example embodiment of the present disclosure, a rechargeable lithium battery includes any one of the above-described positive electrodes, a negative electrode, and a separator interposed between the positive electrode and the negative electrode.

### BRIEF DESCRIPTION OF DRAWINGS

FIG. 1 illustrates a schematic conceptual diagram of a rechargeable lithium battery according to example embodiments of the present disclosure.
FIGS. 2 to 5 illustrate schematic cross-sectional views of a rechargeable lithium battery according to example embodiments of the present disclosure.
FIG. 6 illustrates a cross-sectional view of a positive electrode for a rechargeable lithium battery according to an example embodiment of the present disclosure.
FIG. 7 illustrates an enlarged view of region "M" illustrated in FIG. 6.
FIG. 8 is a conceptual diagram illustrating the appearance of the positive electrode 10 after a calendaring process according to an example embodiment of the present disclosure.
FIG. 9 is a conceptual diagram illustrating the appearance of the positive electrode 10 after a calendaring process according to a comparative example of the present disclosure.
FIG. 10A is an SEM cross-sectional image of the positive electrode according to Example 1, and FIG. 10B shows the boundary of the functional layer in FIG. 10A.
FIG. 11A is an SEM cross-sectional image of the positive electrode according to Example 2, and FIG. 11B shows the boundary of the functional layer in FIG. 11A.
FIG. 12A is an SEM cross-sectional image of the positive electrode according to Comparative Example 1, and FIG. 12B shows the boundary of the functional layer in FIG. 12A.
FIG. 13A is an SEM cross-sectional image of the positive electrode according to Comparative Example 2, and FIG. 13B shows the boundary of the functional layer in FIG. 13A.
FIGS. 14 to 17 are schematic diagrams illustrating a method for manufacturing a positive electrode according to an example embodiment of the present disclosure.

### DETAILED DESCRIPTION

To fully understand the configuration and effects of the present disclosure, some example embodiments are described with reference to the accompanying drawings. However, the present disclosure is not limited to the following example embodiments and may be implemented in various forms. The example embodiments are provided to illustrate the present disclosure and to enable those skilled in the art to fully understand its scope.

In this description, when an element is described as being "on" another element, the element may be directly on the other element, or one or more intervening elements may be present therebetween. In the drawings, certain thicknesses may be exaggerated to better illustrate technical details. Throughout the specification, like reference numerals indicate like elements.

The terms used in this description serve only to explain various example embodiments and are not intended to limit the present disclosure. Unless explicitly stated otherwise, singular forms may also include plural forms. The terms "comprises/includes" and "comprising/including" do not exclude the presence or addition of one or more other components.

The phrases "A or B," "at least one of A and B," "at least one of A or B," "A, B, or C," "at least one of A, B, and C," and "at least one of A, B, or C" include any one or all possible combinations of the listed elements.

In this description, the phrase "combination thereof" may refer to a mixture, a stack, a composite, a copolymer, an alloy, a blend, or a reaction product.

Unless otherwise specifically defined, the term "particle diameter" refers to an average particle diameter. The particle diameter may represent the median particle size (D50), which corresponds to the diameter of particles at 50 vol% in a cumulative particle size distribution. The average particle diameter (D50) may be measured using widely known methods, such as, e.g., a particle size analyzer, transmission electron microscope (TEM) imaging, or scanning electron microscope (SEM) imaging. Alternatively, dynamic light scattering may be used, where particle counts within size ranges are analyzed to calculate the average particle diameter (D50). Additionally, a laser scattering method may be employed, in which a target particle is dispersed in a solvent, introduced into a laser scattering particle measurement device (e.g., MT3000 from Microtrac, Inc.), irradiated with ultrasonic waves at 28 kHz and 60 W, and subsequently analyzed to determine the D50 value based on a 50% cumulative particle size distribution.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

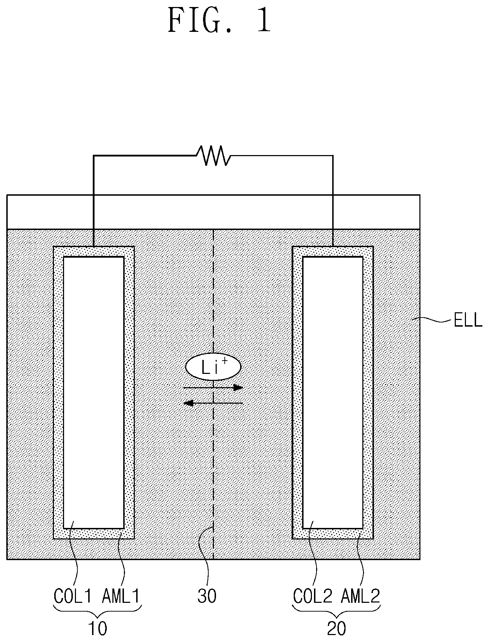

FIG. 1 is a cross-sectional view of a rechargeable lithium battery according to example embodiments of the present invention. Referring to FIG. 1, the rechargeable lithium battery may include a positive electrode 10, a negative electrode 20, a separator 30, and an electrolyte solution ELL.

The positive electrode 10 and the negative electrode 20 may be spaced apart from each other by the separator 30. The separator 30 may be disposed between the positive electrode 10 and the negative electrode 20. The positive electrode 10, the negative electrode 20 and the separator 30 may be in contact with the electrolyte solution ELL. The positive electrode 10, the negative electrode 20 and the separator 30 may be impregnated in the electrolyte solution ELL.

The electrolyte solution ELL may be or include a medium configured to transfer lithium ions between the positive electrode 10 and the negative electrode 20. In the electrolyte solution ELL, the lithium ions may move through the separator 30 toward the positive electrode 10 or the negative electrode 20.

### Positive Electrode 10

The positive electrode 10 for a rechargeable lithium battery may include a current collector COL1, and a positive electrode active material layer AML1 on the current collector. The positive electrode active material layer AML1 may include a positive electrode active material, and may further include a binder and/or a conductive material (e.g., an electrically conductive material).

For example, the positive electrode 10 may further include an additive that may constitute a sacrificial positive electrode.

An amount of the positive electrode active material may be in a range of about 90 wt% to about 99.5 wt% based on 100 wt% of the positive electrode active material layer AML1. Amounts of the binder and the conductive material may be in a range of about 0.5 wt% to about 10 wt%, respectively, based on 100 wt% of the positive electrode active material layer AML1.

The binder may attach the positive electrode active material particles to each other, and may also attach the positive electrode active material to the current collector COL1. Examples of the binder may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, or the like, but the present disclosure is not limited thereto..

The conductive material may impart conductivity (e.g., electrical conductivity) to the electrode. Any material that does not cause chemical change (e.g., that does not cause an undesirable chemical change in the rechargeable lithium battery), and that conducts electrons, may be used in the battery. Examples of the conductive material may include a carbon-based material such as at least one of natural graphite, artificial graphite, carbon black, acetylene black, ketjen black, a carbon fiber, a carbon nanofiber, and carbon nanotube; a metal-based material containing at least one of copper, nickel, aluminum, silver, and the like, in a form of a metal powder or a metal fiber; a conductive polymer such as a polyphenylene derivative; or a mixture thereof.

Al may be used as the current collector COL1, but the current collector COL1 is not limited thereto.

### Positive Electrode Active Material

The positive electrode active material may include a compound (lithiated intercalation compound) that is capable of intercalating and deintercalating lithium. For example, at least one of a composite oxide of lithium and a metal such as or including at least one of cobalt, manganese, nickel, or combinations thereof may be used.

The composite oxide may be or include a lithium transition metal composite oxide. Examples of the composite oxide may include at least one of lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be used. LiₐA_{1-b}X_{b}O_{2-c}D_{c} (0.90≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐNi_{1-b-c}Co_{b}X_{c}O_{2-α}D_{α} (0.90≤a≤1.8, 0≤b≤0.5, 0≤c≤0.5, and 0<α<2); LiₐNi_{1-b-c}Mn_{d}X_{c}O_{2-α}D_{α} (0.90≤a≤1.8, 0≤b≤0.5, 0≤c≤0.5, and 0<α<2); LiₐNi_{b}Co_{c}L¹aGₑO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤f≤2); or LiₐFePO₄ (0.90≤a≤1.8).

In the above Chemical Formulas, A is or includes at least one of Ni, Co, Mn, or a combination thereof; X is or includes at least one of Al, Ni, Co, Mn, Cr, Fe, Mg, Sr, V, a rare earth element or a combination thereof; D is or includes at least one of O, F, S, P, or a combination thereof; G is or includes at least one of Al, Cr, Mn, Fe, Mg, La, Ce, Sr, V, or a combination thereof; and L¹ is or includes at least one of Mn, Al, or a combination thereof.

The positive electrode active material may be or include, for example, a high nickel-based positive electrode active material having a nickel amount that is greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of realizing high capacity, and may be applied to a high-capacity, high-density rechargeable lithium battery.

### Negative Electrode 20

The negative electrode 20 for a rechargeable lithium battery may include a current collector COL2 and a negative electrode active material layer AML2 on the current collector COL2. The negative electrode active material layer AML2 may include a negative electrode active material, and may further include a binder and/or a conductive material (e.g., an electrically conductive material).

For example, the negative electrode active material layer AML2 may include about 90 wt% to about 99 wt% of the negative electrode active material, about 0.5 wt% to about 5 wt% of the binder, and about 0 wt% to about 5 wt% of the conductive material.

The binder may attach the negative electrode active material particles to each other, and may also attach the negative electrode active material to the current collector COL2. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, or a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may impart conductivity (e.g., electrical conductivity) to the electrode. Any material that does not cause a chemical change (e.g., does not cause an undesirable chemical change in the rechargeable lithium battery), and that conducts electrons, may be used in the battery. Non-limiting examples thereof may include a carbon-based material such as at least one of natural graphite, artificial graphite, carbon black, acetylene black, ketjen black, a carbon fiber, a carbon nanofiber, and a carbon nanotube; a metal-based material including at least one of copper, nickel, aluminum, silver, and the like, in a form of a metal powder or a metal fiber; a conductive polymer such as a polyphenylene derivative; or a mixture thereof.

The negative current collector COL2 may include at least one of a copper foil, a nickel foil, a stainless-steel foil, a titanium foil, a nickel foam, a copper foam, a polymer substrate coated with a conductive metal, or a combination thereof.

### Negative Electrode Active Material

The negative electrode active material may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example. crystalline carbon, amorphous carbon or a combination thereof. The crystalline carbon may be or include graphite such as non-shaped, sheet-shaped, flake-shaped, sphere-shaped, or fiber-shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, or Sn.

The material capable of doping/dedoping lithium may be or include a Si-based negative electrode active material, or a Sn-based negative electrode active material. The Si-based negative electrode active material may include silicon, a silicon-carbon composite, SiOx (0 < x < 2), a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, SnO₂, a Sn-based alloy, or a combination thereof.

The silicon-carbon composite may be or include a composite of silicon and amorphous carbon. According to an example embodiment, the silicon-carbon composite may be in the form of silicon particles, and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be used in combination with a carbon-based negative electrode active material.

### Separator 30

Depending on the type of rechargeable lithium battery, the separator 30 may be present between the positive electrode 10 and the negative electrode 20. The separator 30 may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator 30 may include a porous substrate, and a coating layer including an organic material, an inorganic material, or a combination thereof on one surface, or on both surfaces, of the porous substrate.

The porous substrate may be or include a polymer film formed of or including any one polymer such as at least one of polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic-based polymer.

The inorganic material may include inorganic particles such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked together.

### Electrolyte Solution ELL

The electrolyte solution ELL for a rechargeable lithium battery may include a non-aqueous organic solvent and a lithium salt.

The non-aqueous organic solvent may constitute a medium for transmitting ions taking part in the electrochemical reaction of the battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), or the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, or the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, or the like. In addition, the ketone-based solvent may include cyclohexanone, or the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether bond, or the like); amides such as dimethylformamide; dioxolanes such as 1,3-dioxolane, 1,4-dioxolane, and the like; sulfolanes, or the like.

The non-aqueous organic solvents may be used alone, or in combination of two or more solvents.

In addition, when using a carbonate-based solvent, a cyclic carbonate and a chain carbonate may be mixed, and the cyclic carbonate and the chain carbonate may be mixed in a volume ratio in a range of about 1:1 to about 1:9.

The lithium salt dissolved in the organic solvent supplies lithium ions in a battery, enables an operation of a rechargeable lithium battery, and improves transportation of the lithium ions between positive and negative electrodes. Examples of the lithium salt include at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers in a range of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), or lithium bis(oxalato)borate (LiBOB).

### Rechargeable lithium battery

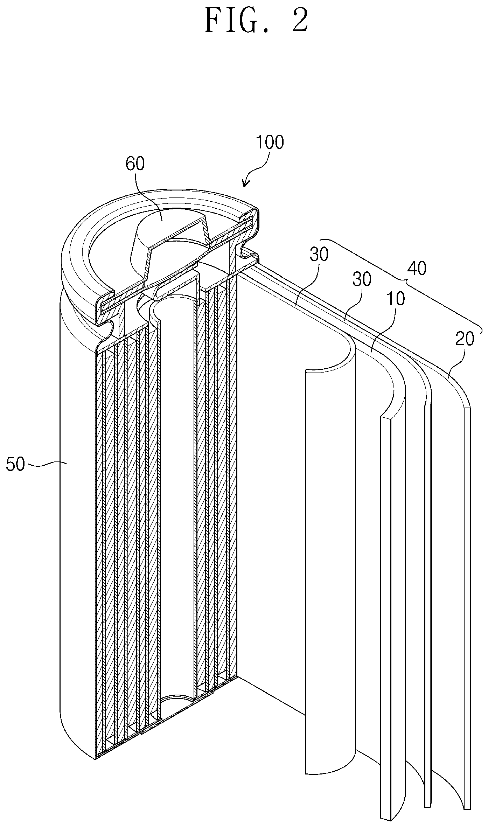

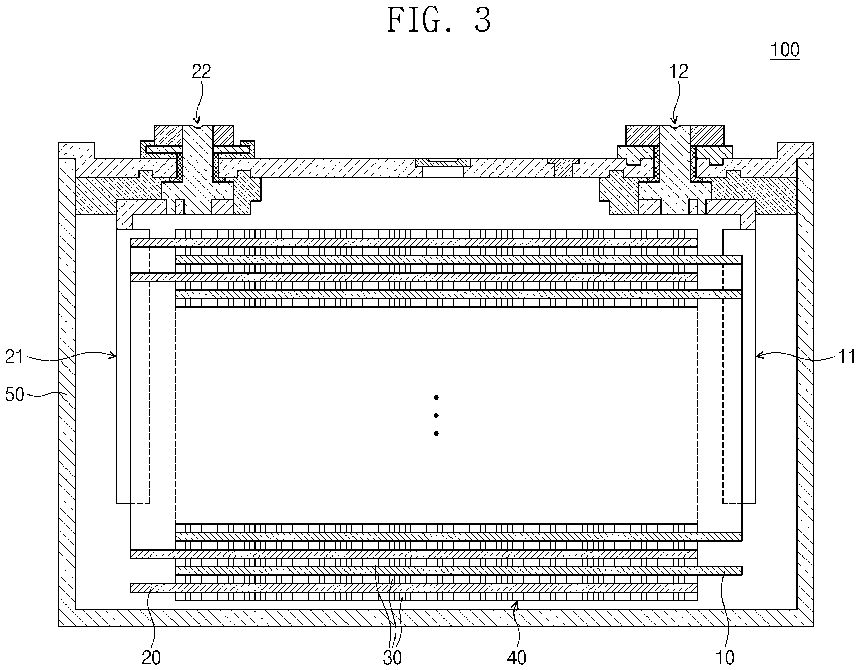

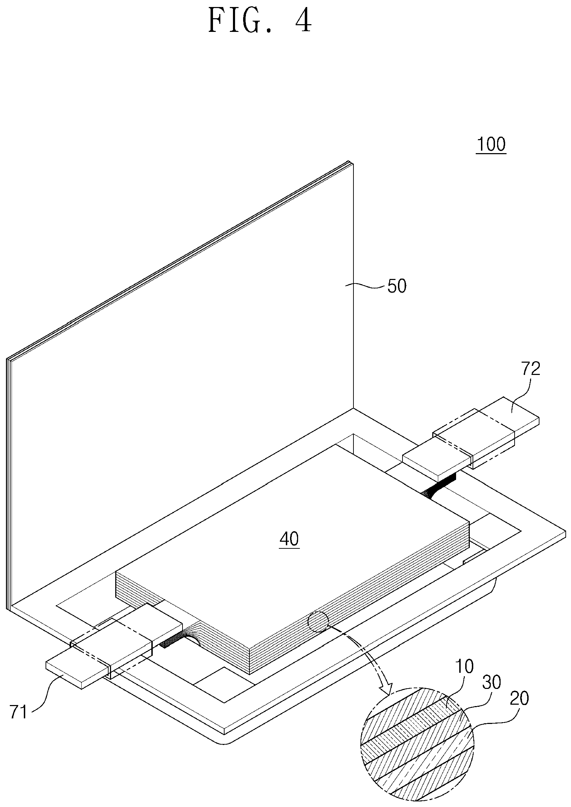

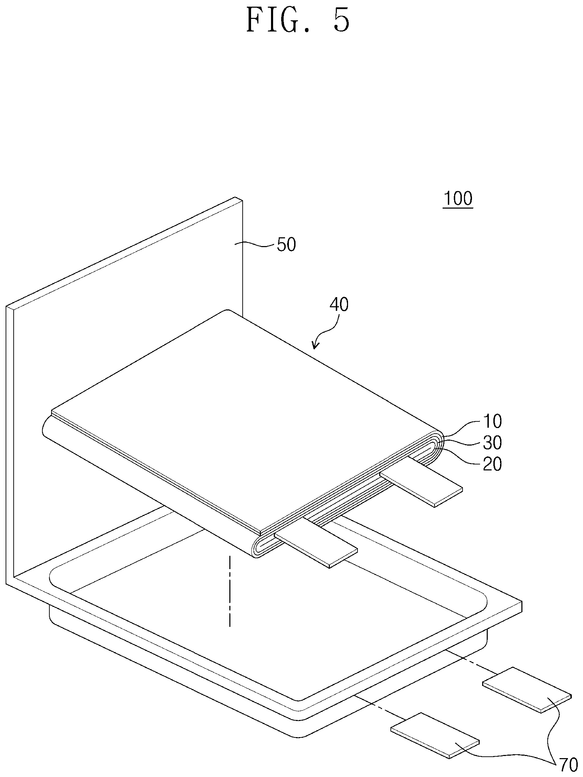

The rechargeable lithium battery may be classified into cylindrical, prismatic, pouch, or coin-type batteries, and the like depending on their shape. FIGS. 2 to 5 are schematic views illustrating a rechargeable lithium battery according to an example embodiment. FIG. 2 shows a cylindrical battery, FIG. 3 shows a prismatic battery, and FIGS. 4 and 5 show pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 2. In FIG. 3, the rechargeable lithium battery 100 may include a positive lead tab 11, a positive terminal 12 connected to the positive lead tab 11, a negative lead tab 21, and a negative terminal 22 connected to the a negative lead tab 21. As shown in FIGS. 4 and 5, the rechargeable lithium battery 100 may include an electrode tab 70 illustrated in FIG. 5, or for example, a positive electrode tab 71 and a negative electrode tab 72 illustrated in FIG. 4, the electrode tabs 70/71/72 forming an electric path for inducing the current formed in the electrode assembly 40 to the outside of the battery 100.

A functional layer disposed between the positive electrode current collector and the positive electrode active material layer may improve penetration safety. However, when the functional layer is disposed, the energy density may decrease, and improving the penetration safety while reducing or minimizing the decrease in the energy density is advantageous. On the other hand, a method for improving the energy density may involves increasing the composite density of the positive electrode through a calendering process. However, during the calendering process, the positive electrode active material particles may damage the functional layer, which may result in a deterioration in penetration safety.

The positive electrode 10 for a rechargeable lithium battery according to the example embodiments of the present disclosure may include a functional layer FNL disposed between the positive electrode current collector COL1 and the positive electrode active material layer AML1, and the functional layer FNL may include a first particle and a second particle having different particle shapes, so that the positive electrode having high energy density and desired or improved penetration safety may be realized.

Hereinafter, the positive electrode for a rechargeable lithium battery according to example embodiments of the present disclosure, and a rechargeable lithium battery including the same, are described in detail.

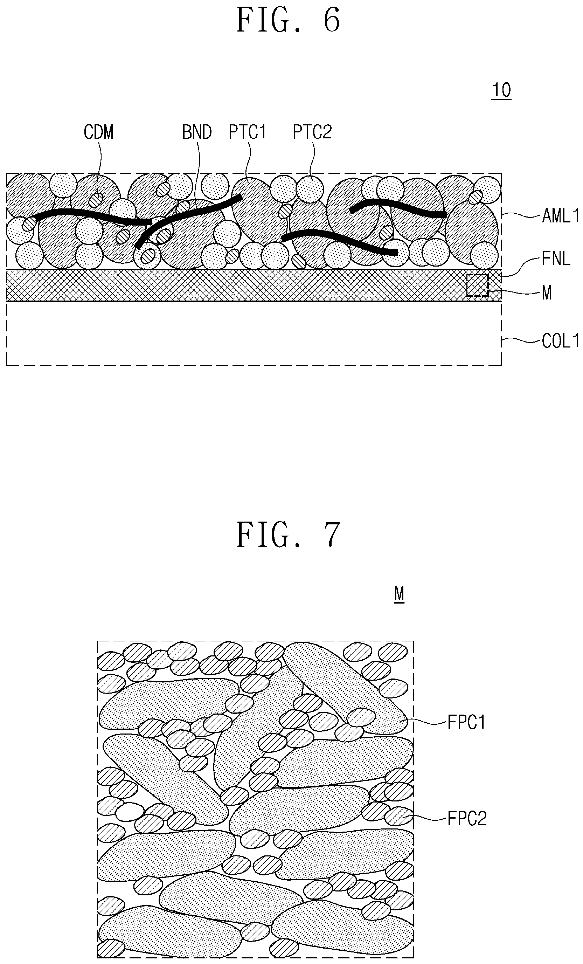

FIG. 6 illustrates a cross-sectional view of the positive electrode for a rechargeable lithium battery according to an example embodiment.

Referring to FIG. 6, in an example embodiment, the positive electrode 10 may include a positive electrode current collector COL1, a functional layer FNL on the positive electrode current collector COL1, and a positive electrode active material layer AML1 on the functional layer FNL.

In an example embodiment, the positive electrode current collector COL1 is the same as described above with reference to FIG. 1.

In an example embodiment, a composite density of the positive electrode 10 may be equal to at least about 3.00 g/cc. The composite density of the positive electrode 10 for the rechargeable lithium battery may be in a range from about 3.00 g/cc to about 5.00 g/CC, from about 3.50 g/cc to about 4.50 g/CC, or from about 4.00 g/C to about 4.50g/CC. The positive electrode 10 may be desired or improved in energy density by having a high composite density in the above range.

In the present specification, "composite density of the positive electrode" refers to a mass-to-volume ratio of the positive electrode active material layer AML1.

In an example embodiment, the positive electrode active material layer AML1 may include a first positive electrode active material particle PTC1, which is a coarse particle. An average particle diameter D50 of the first positive electrode active material particle PTC1 may be in a range of about 6.0 µm to about 20.0 µm, about 10.0 µm to about 20.00 µm, or about 10.0 µm, to about 15.0 µm. In an example embodiment, the average particle diameter of the first positive electrode active material particle PTC1 may be measured by a particle size analyzer. The average particle diameter may refer to the diameter (D50) of a particle having a cumulative volume of 50% by volume in the particle size distribution.

In an example embodiment, the first positive electrode active material particle PTC1 may include the above-described lithium transition metal composite oxide. For example, the first positive electrode active material particle PTClmay include at least one of lithium nickel oxide, a lithium cobalt oxide, a lithium manganese oxide, a lithium iron phosphate compound, a cobalt-free nickel-manganese oxide, or a combination thereof.

In an example embodiment, the first positive electrode active material particle PTC1 may include a lithium cobalt-based oxide (LCO). The lithium cobalt-based oxide may include lithium (Li) and cobalt (Co) as a transition metal. For example, the first positive electrode active material particle PTC1 may include a lithium cobalt-based oxide (LCO), which is a compound represented by the following chemical formula 1 below.

Chemical Formula 1: Liₐ₁COₓ₁M₍₁₋ₓ₁₎O₂.

In Chemical Formula 1, a₁ is in the range of about 0.9 to about 1.8, x₁ is in the range of about 0.7 to about 1, and M is at least one element of Al, B, Ba, Ca, Ce, Cr, Cu, F, Fe, Mg, Mn, Mo, Ni, P, S, Se, Si, Sr, Ti, V, W, Y, Zn, Zr, or a combination thereof.

In an example embodiment, the positive electrode active material layer AML1 may further include a second positive electrode active material particle PTC2, which is a fine particle. An average particle diameter of the second positive electrode active material particle PTC2 may be in a range of about 1.0 µm to about 6.0 µm, about 2.0 µm to about 5.0 µm, or about 3.0 µm to about 5.0µm. In an example embodiment, the average particle diameter of the second positive electrode active material particle PTC2 may be measured by a particle size analyzer. The average particle diameter may refer to the diameter (D50) of a particle having a cumulative volume of 50% by volume in the particle size distribution.

In an example embodiment, the positive electrode active material layer AML1 may include both the first positive electrode active material particle PTC1 being a coarse particle, and the second positive electrode active material particle PTC2 being a fine particle, so that high capacity, high energy density, and improved cycle life may be achieved.

In an example embodiment, the second positive electrode active material particle PTC2 may include a lithium cobalt-based oxide (LCO). For example, the second positive electrode active material particle PTC2 may include a lithium cobalt-based oxide (LCO), which is a compound represented by the following chemical formula 2 below.

Chemical Formula 2: Liₐ₂Coₓ₂M₍₁₋ₓ₂₎O₂.

In Chemical Formula 2, a₂ is in the range of about 0.9 to about 1.8, x₂ is in the range of about 0.7 to about 1, and M is at least one element of Al, B, Ba, Ca, Ce, Cr, Cu, F, Fe, Mg, Mn, Mo, Ni, P, S, Se, Si, Sr, Ti, V, W, Y, Zn, Zr, or a combination thereof.

Referring again to FIG. 6, in an example embodiment, the positive electrode active material layer AML1 may further include a binder BND and a conductive material CDM. The binder BND and the conductive material CDM may respectively be the same as the binder and the conductive material described above with reference to FIG. 1.

FIG. 7 illustrates an enlarged view of region "M" illustrated in FIG. 6.

Referring to FIG. 6, the functional layer FNL may be disposed between the positive electrode current collector COL1 and the positive electrode active material layer AML1.

Referring to FIG. 7, the functional layer FNL may include at least two or more types of particles having different particle shapes. The functional layer FNL may include at least two types of particles having different particle shapes, thereby improving the density of the functional layer FNL. In addition, damage caused by the first positive electrode active material particle PTC1, which is a coarse particle, during the calendering process, may also be reduced or prevented. For example, the functional layer FNL may include a first particle FPC1 and a second particle FPC2 having different particle diameters from each other.

In an example embodiment, an average particle diameter D50 of the first particles FPC1 may be in a range of about 4 µm to about 10 µm, or about 5 µm to about 7 µm. An average particle diameter D50 of the second particle FPC2 may be in a range of about 0.5 µm to about 2 µm, or about 0.5 µm to about 1 µm.

In an example embodiment, the average particle diameter of the first particles FPC1 may be defined as an average length of the first particles FPC1 in the major axis direction. As shown in FIG. 7, the first particle FPC1 may have a shape extending along the major axis on an image such as, e.g., an SEM image. For example, a cross-sectional SEM image of the functional layer FNL may be analyzed using software such as, e.g., Image. One hundred first particles FPC1 may be randomly selected to measure the major axis length thereof. The average value of the measured lengths may be calculated to determine the average particle diameter of the first particles FPC1.

In an example embodiment, an aspect ratio of the first particle FPC1 may be greater than the aspect ratio of the second particle FPC2. For example, the aspect ratio of the first particle FPC1 may be in a range of about 15 to about 50, or about 20 to about 30. The aspect ratio of the second particle FPC2 may be in a range of about 1 to about 8, or about 1 to about 5.

In an example embodiment, the "aspect ratio" of the target particle may be an arithmetic mean value of the aspect ratios of approximately 30 arbitrarily selected particles. The aspect ratio of each particle may be defined as the ratio of the length of the major axis to the minor axis. The "major axis" may be defined as the straight-line distance between the two points farthest from the boundary of each particle. The "minor axis" may be defined as the shortest straight distance between two points on the boundary of the particle, in a plane perpendicular to the major axis. In one example, the aspect ratio may be measured via X-ray computed tomography (CT). For example, a three-dimensional image of each particle may be obtained through X-ray CT, and the aspect ratio may be calculated therefrom.

In an example embodiment, the first particle FPC1 may be or include a platelike particle. When the first particle FPC1 is a plate-shaped particle, the diameter of the first particle FPC1 may be defined as a "major axis", and a thickness of the first particle PFC1 may be define as a "minor axis".

In an example embodiment, a sphericity of the first particle FPC1 may be less than the sphericity of the second particle FPC2. For example, the sphericity of the first particle FPC1 may be greater than 0 and at most about 0.5. For example, the sphericity of the first particle FPC1 may be in a range of about 0.1 to about 0.5. The sphericity of the second particle FPC2 may be in a range of about 0.5 to about 1, or about 0.6 to about 0.9.

In one example embodiment, the "sphericity" of the subject particle may be defined as the arithmetic mean value of the sphericity of approximately 30 arbitrarily selected particles. The "sphericity" of each particle may be defined as the surface area of a sphere having the same volume as the target particle divided by the surface area of the target particle. In one example, sphericity may be measured via X-ray CT. For example, a three-dimensional image of each particle may be obtained through X-ray CT, and the sphericity may be calculated therefrom.

As described above, the functional layer FNL may include the first particle FPC1 and the second particle FPC2 having different aspect ratios and sphericities, so that the density may be increased and an interface with the positive electrode active material layer AML1 may be uniformly, or substantially uniformly, maintained.

In an example embodiment, in the functional layer FNL, a weight ratio of the first particle FPC1 to the total weight of the first particle FPC1 and the second particle FPC2 may be in a range of about 0.5 to about 0.8, or about 0.6 to about 0.8. Within the above range, density and thickness uniformity may be further improved.

In an example embodiment, each of, or at least one of, the first particle FPC1 and the second particle FPC2 may include an insulating inorganic material.

In an example embodiment, the insulating inorganic material may include at least one of boron nitride (BN), aluminum nitride (AlN), silicon nitride (Si₃N₄), alumina (Al₂O₃), zirconia (ZrO₂), silica (SiO₂), magnesium oxide (MgO), boehmite, zeolite kaolinite, or a combination thereof.

As an example, the first particle FPC1 may include boron nitride. For example, the first particle FPC1 may be or include a plate-shaped hexagonal boron nitride (h-BN) particle.

As an example, the second particle FPC2 may include alumina (Al₂O₃) or boehmite.

In an example embodiment, a thickness of the functional layer FNL may vary depending on the position thereof along the length thereof. However, since the functional layer FNL may include the first particle FPC1 and the second particle FPC2, the thickness of the functional layer FML may be relatively uniformly maintained even after the calendering process.

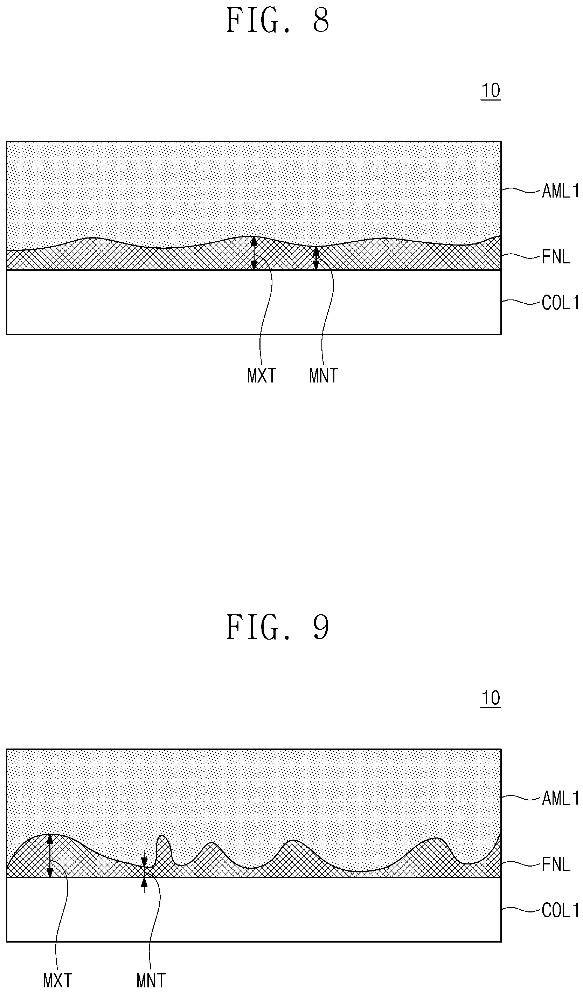

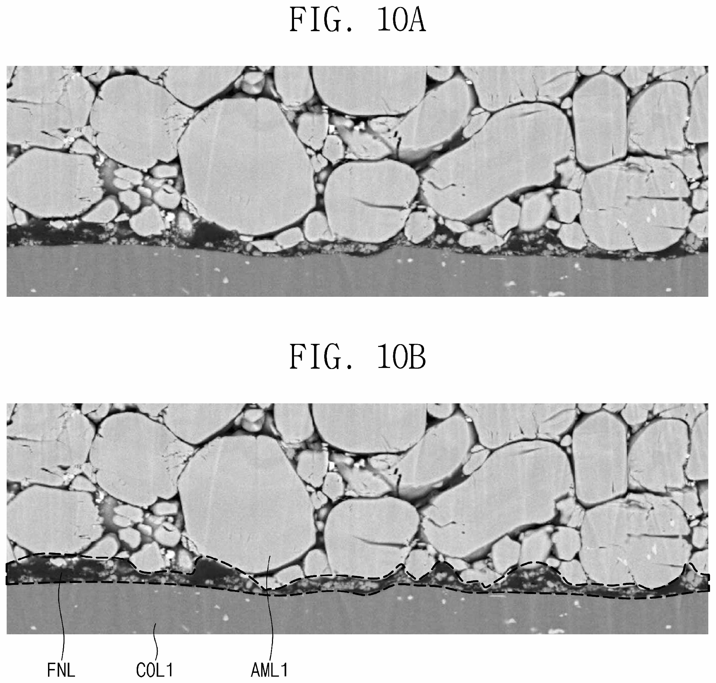

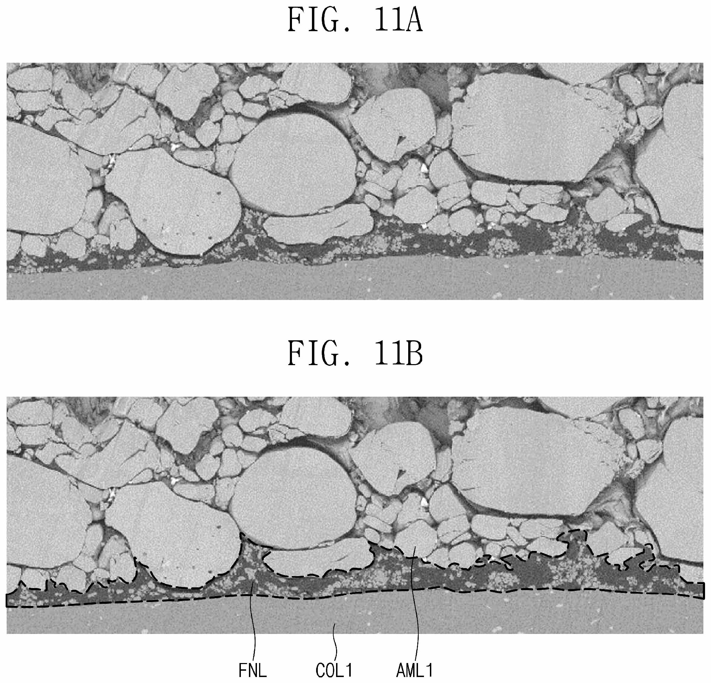

FIG. 8 is a conceptual diagram illustrating the appearance of the positive electrode 10 after the calendaring process is performed, according to an example embodiment of the present disclosure. FIG. 10A is a cross-sectional image of the positive electrode according to Example 1 described below. FIG. 10B shows the boundary of the functional layer in the positive electrode of FIG. 10A. FIG. 11A is a cross-sectional image of the positive electrode according to Example 2 described below. FIG. 11B shows the boundary of the functional layer in the positive electrode of FIG. 11A.

Referring to FIGS. 8, 10A, 10B, 11A, and 11B, the functional layer FNL according to an example embodiment of the present invention may be confirmed to have a relatively uniform thickness.

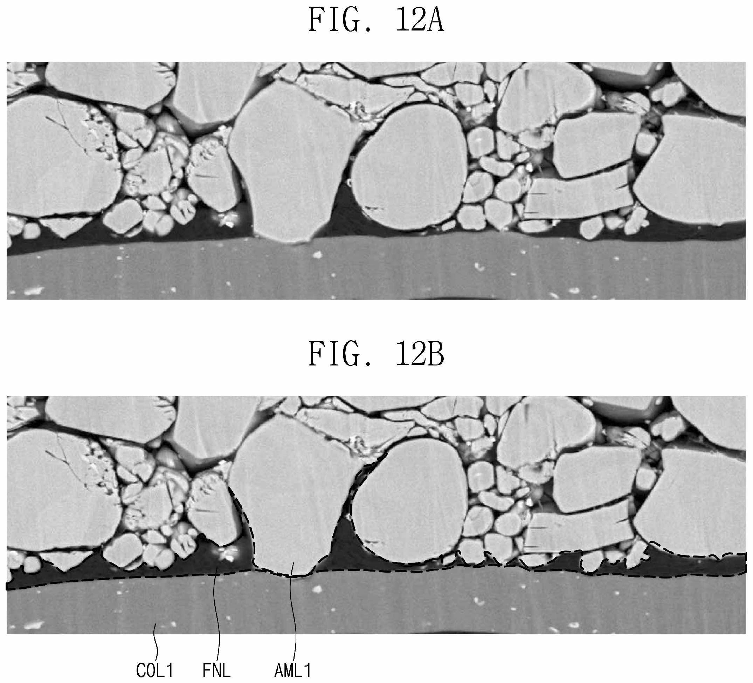

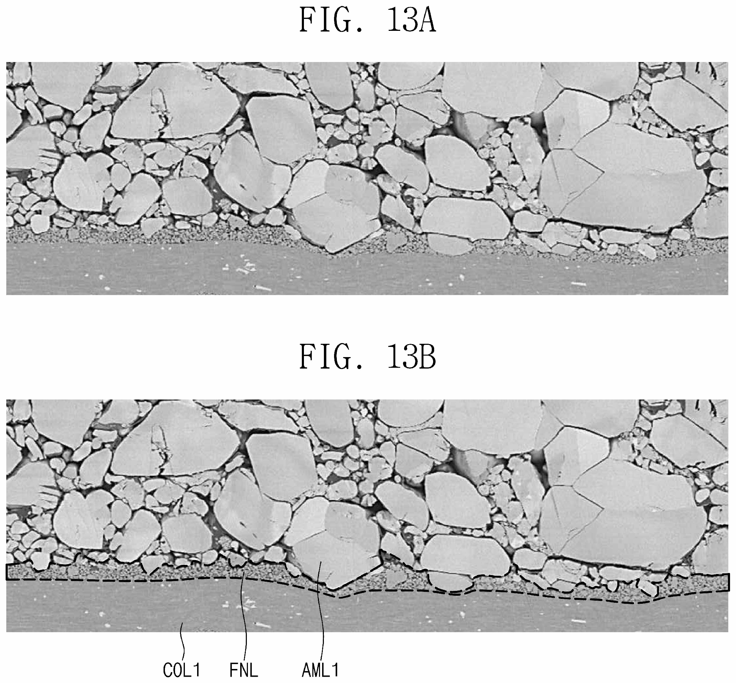

FIG. 9 is a conceptual diagram illustrating the appearance of the positive electrode 10 after a calendaring process is performed, according to a comparative example of the present disclosure. FIG. 12A is a cross-sectional image of the positive electrode according to Comparative Example 1 described below. FIG. 12B shows the boundary of the functional layer in the positive electrode of FIG. 12A. FIG. 13A is a cross-sectional image of the positive electrode according to Comparative Example 2 described below. FIG. 13B shows the boundary of the functional layer in the positive electrode of FIG. 13A.

Referring to FIGS. 9, 12A, 12B, 13A, and 13B, it may be confirmed that when the functional layer FNL includes only one of the first particle FPC1 and the second particle FPC2, the thickness of the functional layer FNL may become highly non-uniform. In particular, it may be confirmed that a region where the positive electrode active material layer AML1 and the positive electrode current collector COL1 are in close proximity is formed.

Referring to FIG. 8, in an example embodiment, a difference between the maximum thickness MXT and the minimum thickness MNT of the functional layer may be about 2 µm or less. For example, the difference between the maximum thickness MXT and the minimum thickness MNT of the functional layer may be about 1.8 µm or less, or about 1.5 µm or less. For example, each of the maximum thickness MXT and the minimum thickness MNT of the functional layer FNL may be a value measured in a cross-sectional image of the functional layer FNL taken with, e.g., an SEM. The thickness of the functional layer FNL may be confirmed through, e.g., component analysis, Raman analysis, X-ray diffraction, electron microscopy, and/or the like.

In an example embodiment, an average thickness of the functional layer FNL may be in a range of about 1.5 µm to about 5 µm. For example, the average thickness of the functional layer FNL may be from about 1.5 µm to about 3.0 µm, or from about 1.8 µm to about 2.5 µm. As an example, the average thickness of the functional layer FNL may be a value measured in a cross-sectional image of the functional layer FNL taken with an SEM.

In an example embodiment, a ratio of the average thickness of the functional layer FNL to the total thickness of the positive electrode 10 may be equal to about 0.1 or less. For example, the ratio of the average thickness of the functional layer FNL to the total thickness of the positive electrode 10 may be in a range of about 0.01 to about 0.1.

In an example embodiment, the weight ratio of the functional layer FNL to the total weight of the positive electrode 10 may be in a range of about 0.1 or less. As an example, the weight ratio of the functional layer FNL to the total weight of the positive electrode10 may be in a range of about 0.05 to about 0.1.

When the functional layer has the above-described thickness ratio and weight ratio, the penetration safety may be improved while maintaining the energy density. Accordingly, a positive electrode having both desired or improved energy density and penetration safety may be implemented.

Hereinafter, a method for manufacturing an electrode for a rechargeable lithium battery according to example embodiments of the present disclosure is described.

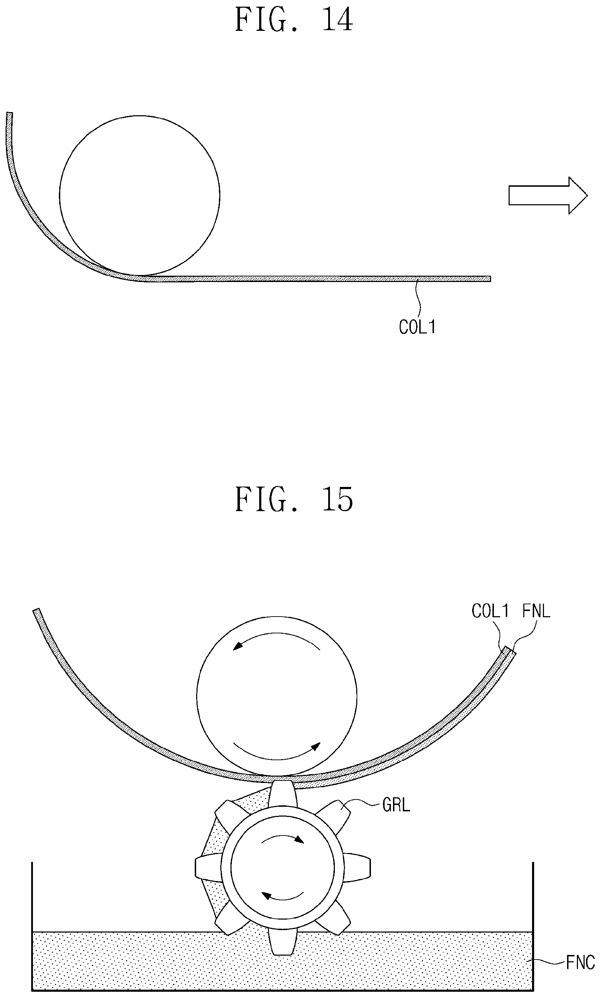

FIGS. 14 to 17 are conceptual diagrams describing a method of manufacturing a positive electrode, according to an example embodiment.

The method of manufacturing a positive electrode may include preparing a positive electrode current collector COL1, forming a functional layer FNL on the positive electrode current collector COL1, and forming a positive electrode active material layer AML1 on the functional layer FNL.

Referring to FIG. 14, in an example embodiment, preparing the positive electrode current collector COL1 may include conveying the positive electrode current collector COL1 in a first direction. The positive electrode current collector COL1 may be the same as the positive electrode current collector COL1 described above with reference to FIG. 1.

In an example embodiment, forming the functional layer FNL on the positive electrode current collector COL1 may include applying the functional composition FNC onto the positive electrode current collection COL1.

Referring to FIG. 15, in an example embodiment, applying the functional composition FNC onto the positive electrode current collector COL1 may be performed by a gravure coating method. For example, by passing the positive electrode current collector COL1 through the gravure roller GRL having an engraved pattern, the functional composition FNC retained in the engraved portions of the gravure roll GRL may be coated onto the positive electrode current collector COL1. The thickness of the functional layer FNL may be precisely controlled through the gravure coating method.

The functional composition FNC may include the first particle FPC1 and the second particle FPC2, as described above with reference to FIGS. 6 and 7. The functional composition FNC may further include a binder.

The binder may include at least one of an acrylate-based binder, a polyvinylidene fluoride-based binder, a polyvinylpyrrolidone-based binder, a polyvinyl alcohol-based binder, a cellulose-based binder, or a combination thereof. The acrylate-based binder may be or include, for example, at least one of polyacrylic acid (PAA), polymethylmethacrylate, polyisobutylmethacrylate, poly(2-ethylhexyl acrylate), or a combination thereof.

The polyvinylidene fluoride-based binder may be or include, for example, at least one of polyvinylidene fluoride (PVDF), poly(vinylidene fluoride-co-hexafluoropropylene), poly(vinylidene fluoride-co-trichloroethylene), poly(vinylidene fluoride-co-tetrafluoroethylene), poly(vinylidene fluoride-co-trifluoroethylene), poly(vinylidene fluoride-co-trifluorochloroethylene), poly(vinylidene fluoride-co-fluoroethylene-co-hexafluoropropylene), or a combination thereof.

The polyvinylpyrrolidone-based binder may be or include, for example, polyvinylpyrrolidone.

The polyvinyl alcohol-based binder may be or include, for example, polyvinyl alcohol.

The cellulose-based binder may be or include, for example, at least one of carboxy methyl cellulose (CMC), methyl cellulose (MC), hydroxypropyl cellulose (HPC), methyl hydroxypropyl cellulose (MHPC), ethyl hydroxyethyl cellulose (EHEC), methyl ethyl hydroxyethyl cellulose (MEHEC) or cellulose gum.

In an example embodiment, the functional layer FNL may include polyvinylidene fluoride (PVDF) as a binder.

In one example embodiment, the binder amount in the functional layer FNL may be in a range from about 0.5 wt% to about 20 wt% based on the total weight of the functional layer FNL.

The functional composition FNC may further include a solvent. In one example embodiment, the solvent may include at least one of water or an organic solvent. In one example, the functional composition FNC may include N-methyl pyrrolidone as a solvent.

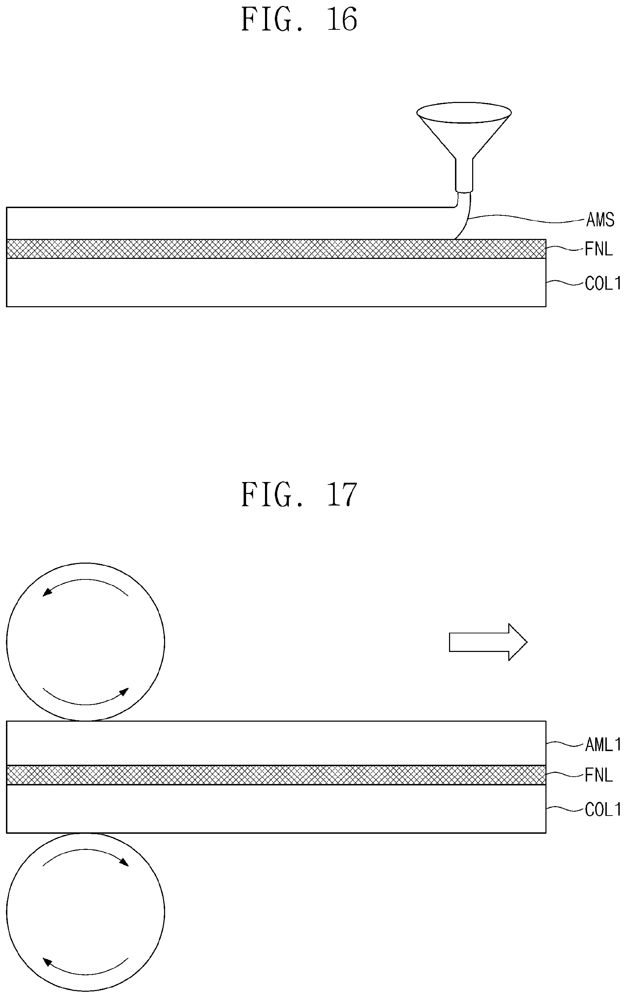

Referring to FIG. 16, the positive electrode active material layer AML1 may be formed on the functional layer FNL. As an example, the positive electrode active material layer AML1 may be formed by applying and drying the positive electrode active materials slurry AMS on the functional layer FNL.

The positive electrode active material slurry AMS may include the first positive electrode active material particle PTC1, the binder BND, and the conductive material CDM described above with reference to FIG. 6. The positive electrode active material slurry AMS may further include the second positive electrode active material particle PTC2. The positive electrode active material slurry AMS may further include a solvent. The positive electrode active material slurry AMS may include at least one of water and an organic solvent.

Referring to FIG. 17, the positive electrode may be manufactured by integrally calendering the positive electrode current collector COL1, the functional layer FNL, and the positive electrode active material layer AML1.

In one example embodiment, the pressure applied during the calendering process may range from about 1.0 ton/cm² to about 10.0 ton/cm². For example, the pressure applied during the calendering process may range from about 3.0 ton/cm² to about 8.0 ton/cm².

The following Examples and Comparative Examples are provided in order to highlight characteristics of one or more example embodiments, but it is understood that the Examples and Comparative Examples are not to be construed as limiting the scope of the example embodiments, nor are the Comparative Examples to be construed as being outside the scope of the example embodiments. Further, it is understood that the example embodiments are not limited to the particular details described in the Examples and Comparative Examples.

### Example 1

### Functional Composition:

Plate-shaped hexagonal boron nitride (h-BN) particles, defined as the first particle FPC1, having an average particle diameter (D50) of about 6 µm, an aspect ratio of about 24, and a sphericity of about 0.3 were prepared.

Boehmite particles, defined as the second particle FPC2, having an average particle diameter (D50) of about 0.8 µm, an aspect ratio of about 3, and a sphericity of about 0.8 were prepared.

A functional particle mixture was prepared by mixing the first particle and the second particle in a weight ratio of 80:20. A functional composition was prepared by mixing about 90 wt% of the functional particle mixture and about 10 wt% of the PVDF binder in an N-methylpyrrolidone solvent. The above wt% were calculated based on the total weight of solids in the functional composition.

### Positive Electrode Active Material Slurry:

A positive electrode slurry was prepared by mixing about 99.0% by weight of a lithium cobalt-based oxide (LiCoO₂, LCO) as a coarse particle with an average particle diameter of about 12 µm, about 0.5% by weight of a PVDF binder, and about 0.5% by weight of a conductive material (carbon nanotube) in an N-methylpyrrolidone solvent. The above wt% was calculated based on the total weight of solid amount in the positive electrode active material slurry.

### Positive Electrode:

The functional composition was gravure coated on an aluminum current collector to form a functional layer FNL. The positive electrode active material slurry was applied onto the functional layer FNL and dried to form the positive electrode active material layer AML1. Thereafter, the current collector, the functional layer, and the positive electrode active material layer were integrally calendered to produce a positive electrode having a composite density of about 4.20 g/cc and a thickness of about 95 µm.

### Preparation of a half-cell:

The coin-type half-cell was fabricated using the positive electrode, a lithium metal counter electrode, and an electrolyte solution. The electrolyte solution was prepared by mixing ethylene carbonate and diethyl carbonate in a 50:50 volume ratio and dissolving 1.0 M LiPF₆ therein.

### Example 2

Except for the functional particle mixture being prepared by mixing the first particle FPC 1 and the second particle FPC2 at a weight ratio of 60:40 during the preparation of the functional composition, a positive electrode (composite density: about 4.20 g/cc, thickness: about 95 µm) and a pouch cell were fabricated in the same manner as in Example 1.

### Comparative Example 1

Except for the functional particle mixture being prepared by mixing the first particle FPC1 and the second particle FPC2 at a weight ratio of 100:0 during the preparation of the functional composition, a positive electrode (composite density: about 4.20 g/cc, thickness: about 95 µm) and a pouch cell were fabricated in the same manner as in Example 1. That is, the functional layer was formed without adding the second particle FPC2.

### Comparative Example 2

Except for the functional particle mixture being prepared by mixing the first particle FPC1 and the second particle FPC2 at a weight ratio of 0:100 during the preparation of the functional composition, a positive electrode (composite density: about 4.20 g/cc, thickness: about 95 µm) and a pouch cell were fabricated in the same manner as in Example 1. That is, the functional layer was formed without adding the first particle FPC1.

### Evaluation Example 1: Measurement of Functional Layer Thickness

The functional layer thicknesses of the positive electrodes according to Examples and Comparative Examples were measured, and the results are shown in Table 1 below, and FIGS. 10A to 13B. Specifically, FIGS. 10A and 10B are SEM cross-sectional images of the positive electrode according to Example 1. FIGS. 11A and 11B are SEM cross-sectional images of a positive electrode according to Example 2. FIGS. 12A and 12B are SEM cross-sectional images of the positive electrode according to Comparative Example 1. FIGS. 13A and 13B are SEM cross-sectional images of the positive electrode according to Comparative Example 2.

After obtaining the SEM cross-sectional images of the positive electrodes according to the Examples and Comparative Examples, the boundary of the functional layer was identified using the image analysis software Image J. Thereafter, the minimum thickness, the maximum thickness, the thickness variation, and the average thickness of the functional layer were measured and shown in Table 1. The thickness variation was defined as the difference between the maximum thickness and the minimum thickness.

### Evaluation Example 2: Penetration safety Evaluation

Ten rechargeable lithium battery pouch cells were prepared for each of Examples and Comparative Examples. The pouch cells were charged at 25°C with a constant current of 0.5 C until the upper limit voltage of 4.5 V was reached, and then charged at a constant voltage until the current decreased to 0.05 C. After resting for about 24 hours, each pouch cell was penetrated through the center at a speed of 150 mm/sec using a pin with a diameter of about 3 mm. As a result of measuring the temperature change over time after penetration, cells that exhibited a peak exothermic temperature of 100°C or higher were evaluated as defective, and the penetration safety ratings were classified based on the number of such defective cells.

O: 1 or fewer defective cells, Δ: 2 to 5 defective cells, X: 6 or more defective cells

**Table 1**

| | Mixed Weight Ratio | | Functional Layer Thickness (µm) | | | | Penetration safety |
|---|---|---|---|---|---|---|---|
| | First Particle | Second Particle | Average Thickness | Maximum Thickness | Minimum Thickness | Thickness Variation | |
| Example 1 | 80 | 20 | 1.9 | 2.3 | 1.1 | 1.3 | O |
| Example 2 | 60 | 40 | 2.5 | 3.1 | 1.5 | 1.7 | O |
| Comparative Example 1 | 100 | 0 | 2.2 | 4.6 | 0.3 | 4.2 | X |
| Comparative Example 2 | 0 | 100 | 2.2 | 3.0 | 0.9 | 2.1 | Δ |

Referring to Table 1, it may be confirmed that the functional layer according to the Examples including both the first particle and the second particle have a relatively uniform thickness variation of about 2 µm or less, and the penetration safety of the positive electrode including the functional layer according to the Examples is desired or improved.

A positive electrode according to an example embodiment of the present disclosure may include a functional layer disposed between a positive electrode current collector and a positive electrode active material layer, and the functional layer may include the first particle and the second particle having different particle shapes, so that a positive electrode having high energy density and desired or improved penetration safety may be implemented.

The rechargeable lithium battery according to an example embodiment of the present disclosure may have a high energy density and desired or improved penetration safety by including the positive electrode.

While the present disclosure has been described with reference to example embodiments, it should be understood that these example embodiments are provided for illustrative purposes only, and do not limit the scope of the present disclosure. Various modifications and equivalent arrangements may be made without departing from the spirit and scope of the appended claims. Accordingly, the described embodiments should be regarded as examples rather than limitations of the present disclosure.

## Claims

1. A positive electrode (10) for a rechargeable lithium battery (100), the positive electrode (10) comprising:
a positive electrode current collector (COL1);
a functional layer (FNL) on the positive electrode current collector (COL1), the functional layer (FNL) comprising a first particle (FPC1) and a second particle (FPC2); and
a positive electrode active material layer (AML1) on the functional layer (FNL),
wherein an aspect ratio of the first particle (FPC1) is greater than an aspect ratio of the second particle (FPC2), wherein the aspect ratio is defined as the ratio of a length of a major axis to a minor axis of the particle (FPC1, FPC2) and determined via X-ray computed tomography,
wherein a sphericity of the first particle (FPC1) is less than a sphericity of the second particle (FPC2), wherein the sphericity is defined as the surface area of a sphere having the same volume as the particle (FPC1, FPC2) divided by the surface area of the particle (FPC1, FPC2) and determined via X-ray computed tomography.

2. The positive electrode (10) as claimed in claim 1, wherein:
the aspect ratio of the first particle (FPC1) is in a range of 20 to 30, and
the aspect ratio of the second particle (FPC2) is in a range of 1 to 5.

3. The positive electrode (10) according to any preceding claims, wherein:
the sphericity of the first particle (FPC1) is equal to or lower than 0.5, and
the sphericity of the second particle (FPC2) is in a range of 0.5 to 1.

4. The positive electrode (10) according to any preceding claims, wherein an average particle diameter of the first particle (FPC1) is in a range of 5 µm to 7 µm, wherein the average particle diameter is defined as an arithmetic mean of major axis lengths of first particles (FPC1), measured from a cross-sectional SEM image.

5. The positive electrode (10) according to any preceding claims, wherein an average particle diameter of the second particle (FPC2) is in a range of 0.5 µm to 1 µm, wherein the average particle diameter is defined as an arithmetic mean of major axis lengths of second particles (FPC2), measured from a cross-sectional SEM image.

6. The positive electrode (10) according to any preceding claims, wherein a composite density of the positive electrode active material layer (AML1) is equal to or greater than 3.00 g/cc, wherein the composite density refers to a mass-to-volume ratio of the positive electrode active material layer (AML1).

7. The positive electrode (10) according to any preceding claims,
wherein the positive electrode active material layer (AML1) comprises a first positive electrode active material particle (PTC1), and
wherein the first positive electrode active material particle (PTC1) comprises lithium cobalt oxide.

8. The positive electrode (10) as claimed in claim 7, wherein an average particle diameter of the first positive electrode active material particle (PTC1) is in a range of 10 µm to 30 µm, wherein the average particle diameter of the first positive electrode active material particle (PTC1) is measured by a particle size analyzer.

9. The positive electrode (10) according to any preceding claims,
wherein a thickness of the functional layer (FNL) varies depending on a position thereof, and
wherein a difference between a maximum thickness (MXT) and a minimum thickness (MNT) of the functional layer (FNL) is equal to 2 µm or less.

10. The positive electrode (10) according to any preceding claims, wherein an average thickness of the functional layer (FNL) is in a range of 1.5 µm to 5 µm.

11. The positive electrode (10) according to any preceding claims,
wherein a ratio of an average thickness of the functional layer (FNL) to a total thickness of the positive electrode (10) is equal to 0.1 or less.

12. The positive electrode (10) according to any preceding claims,
wherein at least one of the first particle (FPC1) and the second particle (FPC2) comprises an insulating inorganic material, and
wherein the insulating inorganic material comprises at least one of boron nitride (BN), aluminum nitride (AlN), silicon nitride (Si₃N₄), alumina (Al₂O₃), zirconia (ZrO₂), silica (SiO₂), magnesium oxide (MgO), boehmite, zeolite kaolinite, and a combination thereof.

13. The positive electrode (10) according to any preceding claims,
wherein a weight ratio of the first particle (FPC1) to a total weight of the first particle (FPC1) and the second particle (FPC2) is in a range of 0.5 to 0.8.

14. A rechargeable lithium battery (100), comprising:
the positive electrode (10) according to any one of claims 1 to 13;
a negative electrode (20); and
a separator (30) interposed between the positive electrode (10) and the negative electrode (20).

15. The rechargeable lithium battery (100) as claimed in claim 14,
further comprising an electrolyte (ELL).
